# EUROPEAN PATENT SPECIFICATION

(11) **EP 4 565 416 B1**
(45) Date of publication and mention of the grant of the patent: **17.06.2026**
(21) Application number: 23751954.1
(22) Date of filing: 03.08.2023
(51) Int. Cl.: B30B 15/06, B29C 35/02, B29C 35/16, B29C 44/10, B29C 44/14, B29C 44/34, B29C 35/04

(54) **PRESS FOR MANUFACTURING A SANDWICH PRODUCT**
PRESSE ZUR HERSTELLUNG EINES SANDWICHPRODUKTS
PRESSE POUR LA FABRICATION D'UN PRODUIT SANDWICH

(30) Priority: 04.08.2022 NL 2032679
(43) Date of publication of application: 11.06.2025
(73) Proprietor: FITS Holding B.V., 3972 WB Driebergen-Rijsenburg (NL)
(72) Inventor: DE GROOT, Martin Theodoor, 3972 WB DRIEBERGEN-RIJSENBURG (NL)
(74) Representative: EP&C
(86) International application number: PCT/EP2023/071527
(87) International publication number: WO 2024/028431

(56) References cited:
- WO-A1-2015/065176
- WO-A1-2020/117048
- DE-A1- 3 408 622
- US-A- 3 775 033

## Description

The present invention relates to a press for in-situ manufacturing a sandwich product comprising a foamed thermoplastic core between covers, in particular a thermoplastic sandwich panel, as well as manufacturing methods using such a press.

In-situ manufacturing of sandwich panels from a starting structure is known in the art. E.g. EP636463 discloses such a method. In-situ manufacturing according to EP636463 involves at least the steps of providing a starting structure comprising a core layer of a thermoplastic wherein a physical blowing agent, in particular a swelling agent, is incorporated, covered at least at one surface with a skin layer. Typically the core layer is arranged between two skin layers, advantageously fibre-reinforced thermoplastic skin layers. The starting structure is positioned in a heated press between a bottom press plate and a top press plate. The press is subsequently closed and the press plates exert a pressure on the starting structure. The starting structure is heated to the foaming temperature (above the boiling temperature of the swelling agent) of the thermoplastic, while continuing to apply pressure on the starting structure to prevent premature foaming. Upon heating adhesion between the core layer and the skin layers occurs by migration of the swelling agent from the core layer of the starting structure into the skin layers. In this way an homogenous foaming layer is created between the skin layers. Once the foaming temperature is reached, foaming is performed by moving the press plates apart to a predetermined distance in a controlled way, allowing the thermoplastic of the core layer to expand and foam cells to be formed by the physical blowing agent. Thus foaming and adherence occur in the same press. Pressure is maintained on the structure now foamed and the press plates are cooled. When sufficiently cooled so that no further foaming occurs, typically below the boiling temperature of the swelling agent, e.g. ambient temperature, the pressure may be fully relieved and the sandwich panel thus obtained can be removed from the press. In manufacturing a thermoplastic sandwich panel with a physical blowing agent, fast cooling is required in order to prevent collapse of the foam, in particular at the interface of the foam and skin layers, as well as to prevent further migration of the physical blowing agent into the thermoplastic of the fibre-reinforced thermoplastic skins, if present.

In case of a chemical blowing agent as described in e.g. WO2015/065176A1 the starting structure is placed in a heated press, which has been heated to a temperature well above the melting temperature or range of the thermoplastic in the core. The chemical blowing agent in the core layer is decomposed, after which the intermediate structure obtained is cooled down to a temperature typically just above the melting temperature of the respective thermoplastic of the core layer in an intermediate cooling step. Subsequently foaming is performed by moving the press plates apart in a controlled way, while pressure is maintained on the structure being foamed, and when the required predetermined foaming thickness is reached the press plates are cooled down further.

For productivity reasons the various process steps of heating, foaming and cooling should be fast, e.g. in the range of tens of seconds to at most a few minutes, as well as homogeneous, in particular during cooling, in order to prevent significant temperature differences over the press plates, which might affect the quality of the final sandwich panel. Fast cooling is also necessary to prevent after-foaming and in particular to prevent collapse of the cells formed, which would seriously affect the mechanical properties of the sandwich panel thus obtained. WO2020/117048A1 has disclosed a press for manufacturing such a sandwich panel. This known press has a fluid circulation loop for heating and cooling the press plates. The fluid circulation loop comprises a heater for generating a heated fluid having an outlet connected to a fluid supply conduit and an inlet connected to a fluid return conduit. The fluid supply conduit is in fluid communication with an inlet of at least one internal flow channel in each press plate and the fluid return conduit is in fluid communication with an outlet of the at least one internal flow channel of each press plate. Furthermore the fluid circulation loop is provided with a controlled expansion valve configured for conversion of hot pressurized water into steam for cooling the press plates. A water source has an outlet in fluid communication with the inlets of the internal flow channel of each press plate via a water supply conduit. Furthermore it is disclosed that if the volume of hot pressurized water in the flow channels becomes too small and is insufficient for the required cooling by phase transformation, additional preferably hot pressurized water can be introduced in the flow channels. The purpose of this kind of flash cooling using the heat of evaporation to convert hot pressurized water in the press plate flow channels into steam, after shutting down the flow of pressurized hot water through these flow channels, is to improve the homogeneity of the temperature over the surfaces of the press plates, in particular during a primary stage of cooling.

Now it has appeared that the large volume of steam to be discharged from the press plate channels and the supply conduit, including the connections and headers or manifolds, causes high flow rates such that hot water contained in the flow channels is entrained forcibly with the steam and is blown out as well. As a result the flow channels are rapidly emptied and they remain insufficiently wetted, such that the desired rapid cooling cannot be realized for the entire cooling period of time, and/or such that the temperature over and/or between the press plates is non-uniform, which is not acceptable. If the cooling rate is too low, in particular at the initial cooling stage, the quality of the final sandwich panel is affected. Adding make-up water in order to compensate the loss of water as disclosed in WO2020/117048A1 has not provided a satisfactory solution.

An object of the invention is to avoid this disadvantage. In particular it is an object of the invention to maintain a sufficiently rapid and homogeneous cooling during initial cooling of the foamed sandwich product.

A press for manufacturing a sandwich product comprising a foamed thermoplastic core between covers, in particular a thermoplastic sandwich product, more particularly in-situ manufacturing a thermoplastic sandwich panel is defined in the attached claim 1. Embodiments of the press according to the invention are defined in the subclaims. Methods for producing sandwich products, preferably using this press, are also defined in the claims. The press according to the invention comprises press plates (sometimes also referred to as press tools), that can be moved with respect to one another, typically a bottom press plate and a top press plate that are arranged above each other and that can perform a movement in a vertical direction. Typically one or both of the press plates has a cavity wherein a starting structure for the sandwich product can be positioned. Generally the periphery of the cavity engages the periphery of the starting structure such that during the controlled foaming stage only expansion in the thickness (vertical) direction can occur. Typical products that can be made using this press according to the invention include two dimensional products (high length and width compared to thickness) such as sandwich panels. The panels preferably have a flat configuration, although slightly curved or corrugated shapes are also contemplated.

The press according to the invention comprises a heater that allows for generating hot water, to be used in the heating and cooling stages of the manufacturing process, as will be explained below in more detail. The heater has a supply inlet for supplying fresh water, as well as a hot water outlet and a return inlet. The hot water outlet and return inlet are connected to a fluid circulation loop. The press plates may be heated using a heated fluid, typically hot water, that circulates in the fluid circulation loop through the press plates, in the heating and foaming stages of manufacturing the sandwich product. Steam may be used as an alternative for heating the press plates, but in that case, prior to cooling the fluid circulation loop is to be filled with hot pressurized water. Typically an electrical heater, boiler or other heat exchanger is used as the heater to heat water to the required temperature (range). The heater may be a boiler that generates the hot water at a constant high delivery pressure, thereby avoiding the risk of forming vapour bubbles in the supply lines and manifolds to the press plates. The press has a fluid circulation loop for heating and cooling the press plates in the respective operation stages of the press. Each press plate has at least one internal flow channel, through which a fluid can flow from the flow channel inlet to the flow channel outlet, typically a plurality of channels in each press plate. Typically the inlet ends of the plurality of flow channels are connected to one or more supply manifolds or headers for connection to the fluid supply conduit and the outlet ends are connected to one or more collector manifolds or headers for connection to the fluid return conduit. During heating, foaming and cooling adjacent internal flow channels in the same press plate are preferably fed in counterflow. The hot water outlet of the heater is connected to the inlet end of the at least one flow channel in each press plate via a fluid supply conduit. The return inlet is connected to the outlet end of the at least one flow channel via a fluid return conduit. Circulation of water is provided by means of one or more suitable pumps in the fluid return conduit. For heating the press plates, the heater prepares hot water and this hot water is circulated to the flow channels in the press plates via the fluid supply conduit and from the press plates via the fluid return conduit back. Temperature and pressure of the hot water as supplied to the press plates are generally in the range of 170-250 °C and 8-30 bar respectively, taking into account the type of blowing agent. For a physical blowing agent lower temperatures such as 170-190 °C are appropriate. For chemical blowing agents which need decomposition typically higher temperatures such as 210-230 °C are applied. Advantageously, the distribution of the flow channels in the body of the press plates and in operation the flow rate through every channel of both press plates is such that a homogeneous temperature (distribution) of the inner faces, directed to the product, of the press plates is achieved.

The press according to the invention also has a cooling mode in which partially the cooling effect is based on the heat of evaporation that is required for conversion of the hot pressurized water into steam. The heat of evaporation required for this conversion is withdrawn (homogeneously) from the press plates. Thus the press plates cool the foamed structure.

The fluid return conduit of the fluid circulation loop is in controlled fluid communication with an outlet control pressure valve. In the cooling mode the connection between the heater and the fluid circulation loop is closed. Then in the first cooling stage the outlet control pressure valve is opened, while hot pressurized water is circulated over the press plates. The hot water is derived from at least one water source for supplying temperature controlled water, of which source the outlet having a valve is connected to the fluid return conduit at a position upstream of the circulation pump. The pump pressurizes the hot water. The temperature and pressure of the hot pressurized water is below the saturation pressure at the prevailing temperature of the press plates, such as a water temperature in the range of 80-100 °C. Steam is formed predominantly in the flow channels of the press plates and expands at the outlet control pressure valve and downstream thereof. In the first cooling stage cooling by flowing hot pressurized water is continued, until the press plates achieve a predetermined first temperature. In order to prevent emptying of the flow channels and insufficient wetting of the internal flow channels, while ensuring dissolving of steam formed in the water in the internal flow channels of the press plates, the outlet pressure control valve is opened gradually and the total flow of water is maintained at a relative low level. The predetermined first temperature is typically in the range of 105-125 °C, such as 110-120 °C.

Optionally, if the outlet control pressure valve is open to atmospheric pressure, a second cooling stage is carried out, wherein cooling from the predetermined first temperature to a predetermined second temperature of the at least one press plate is performed by introducing water from the at least one water source in the fluid circulation loop and the total water flow is increased by controlling the pump.

Thus once the press plates have reached the predetermined first temperature, the optional second cooling stage may be started, wherein the press plates are further cooled to a predetermined second temperature, using water from the at least one water source typically having a lower temperature derived from a temperature controlled water source. The water temperature is typically in the range of 70-90 °C. In this way cooling by evaporation until the press plates reaches a temperature of 100 °C and convection is continued. However, as in the first cooling stage the temperature difference between the circulating water of about 100 °C and the press plates being cooled decreases the cooling rate would slow down and the required high cooling rate cannot be achieved. Preferably, the flow in the second cooling stage if present, is increased and the temperature is set such that evaporative cooling is prevented. Therefore in this optional second cooling stage the water temperature is decreased and the flow rate is increased by adjusting the circulation pump, e.g. the flow in the second cooling stage is about 8-10 times the flow in the first cooling stage in order to obtain the required cooling rate and also the temperature homogeneity over the press plates. The predetermined second temperature is typically in the range of 75-95 °C, such as 80-85 °C. The larger the difference between the inlet temperature of the water fed to the press plates and the measured temperature of the press plates, the lower the inlet pressure corresponding to a value below the saturation pressure has to be, increasing the risk of water entrainment with any steam formed.

This optional second cooling step may be omitted if the outlet control pressure valve is in communication with sub atmospheric environment, e.g. using a vacuum pump, which allow to deeper cool the press.

The press according to the invention comprises control means configured for operating the press under the heating, foaming and cooling conditions.

In a preferred embodiment a vacuum pump is provided on the flash tank, which allows for lower predetermined first and second temperatures in the first and second cooling stages. This additional pressure reduction, caused by applying a (partial) vacuum using a vacuum pump connected via a flash vessel to be discussed to the fluid return conduit, results in a decrease of the temperature at which steam formation occurs. This would allow to continue the cooling by phase transformation of water into steam down to a lower temperature, e.g. less than 90 °C, compared to the above range of the predetermined first temperature, offering a more homogeneous temperature of the press plates.

The third slow cooling stage is performed by water cooling from either the predetermined temperature (or the predetermined second temperature if the second cooling stage is performed) using temperature controlled water from the at least one water source, however at a reduced cooling rate. Typically in view of uniform cooling in this stage the temperature difference between the temperature of the circulating water and that of the press plates is kept constant, such as in the range of 1-15 °C, preferably in the range of 3-12 °C. If necessary, the increased flow may be maintained in the third cooling phase.

The press according to the invention ensures that in the fast first and optional second cooling stages, water having an appropriate pressure and temperature continuously flows in a sufficient amount through the internal flow channels and the steam formed is dissolved in the flow of water, thereby still cooling the press plates. The expansion occurs at the outlet control pressure valve or downstream thereof.

The at least one water source for supplying temperature controlled water in the first cooling stage, is configured to deliver water of about 100 °C in the fluid circulation loop, In an embodiment the outlet control pressure vessel is in fluid communication with a downstream flash tank for recovery of water from the steam formed. In a further embodiment thereof the flash tank is provided with a water outlet in fluid communication with the fluid return conduit, upstream of the circulation pump and functions as one of the at least one water sources. The outlet pressure control valve is connected to a downstream flash tank, which is held at atmospheric pressure or at a reduced pressure via the vacuum pump. Then the expansion predominantly occurs in the flash tank. The recovered water thereof is returned into the fluid return conduit upstream of the circulation pump. As the recovered water from the flash tank has a temperature of 100 °C under atmospheric conditions, once the recovered water is pressurized again by the circulation pump in the fluid return conduit, the temperature thereof is still below that of the press plates (i.e. the saturation pressure of the circulating water to the press is lower than the saturation pressure at the prevailing temperature of the press plates), such that continued flashing and thus cooling can be performed in a first cooling stage down to the predetermined first temperature, such as in the range of 105-125 °C. Under sub atmospheric conditions evaporative cooling in the first cooling stage may be continued to a lower predetermined first temperature of less than 90 °C A further water source may be present for make-up of water that is lost in the first cooling stage and for setting the appropriate temperature of the water derived from the flash tank by mixing therewith in the optional second cooling stage.

Instead of using recovered water from the flash tank a separate temperature controlled water source can be used.

Thus during the first and (part of the) second cooling stages pressurized water having an elevated temperature of about 100 °C is flowed through the at least one internal flow channel in each press plate to the outlet control pressure valve. The hot pressurized water absorbs the heat from the press plates, and is transformed into steam, thereby cooling the press plates. The steam bubbles are solved in the flow of hot pressurized water, because it is still under pressure by the constantly fed hot pressurized water. The steam thus solved expands at or downstream of the outlet pressure control valve. This absorbed heat is discharged in the form of vapour through evaporation of the hot pressurized water. The water recovered from the flash tank has a temperature of 100 C at atmospheric pressure and can be used for cooling the press plates with 100 C water in the first cooling stage and in the second cooling stage until the press plates reach the predetermined second temperature, which water absorbs the heat of the press plates and transforms into steam, which is solved in the constant flow of water of 100 °C through the press plates. The entrainment of hot pressurized water in the vapour formed is strongly reduced by maintaining the pressure of the hot water at an appropriate level but below the saturation temperature at the prevailing temperature of the press plates, thereby avoiding emptying of the flow channels and ensuring sufficient wetting. The actual temperature of at least one press plate, preferably of both pressure plates is monitored. Typically the temperature of a press plate is measured by the temperature sensor(s) at a position of a few mm, such as 3-4 mm, below the press face in the centre of the press plate. From the measured temperature, such as the average value of the measured temperature of both press plates, the corresponding saturation pressure at that (averaged) measured temperature can be calculated, e.g. using a look-up table. Advantageously temperature and pressure of the circulating water fed to the press plates are monitored as well.

The withdrawal of heat from the press plates by conversion of the hot pressurized recovered water into steam according to the invention is more uniform than in cooling with cold water, but still fast enough to achieve the required cooling rates. This uniform cooling according to the present invention also results in press plate surfaces having a more homogeneous temperature over the surface of and/or between the press plates resulting in less local varying density and cell dimensions in the final sandwich panel and a better and more homogeneous bonding between foam and the covers. Thus the quality of the sandwich panel as made is improved.

The press operation is typically controlled using a PLC, PC or similar device. In an embodiment the controller comprises a processor and a memory storing computer-readable instructions which, when executed by the processor, perform processes, including:
pre-heating the press plates by flowing a hot fluid through the fluid heating circulation loop;
closing the press by moving the pre-heated press plates towards one another and exerting a pressure on a starting structure of the sandwich panel to be manufactured;
heating the starting structure to the foaming temperature, while exerting a pressure on the starting structure: (if the heat content of the pre-heated press plate is insufficient to allow the starting structure to achieve the foaming temperature, heating the press plates by flowing a hot fluid through the fluid circulation loop is continued);
foaming the starting structure at the foaming temperature by moving the press plates a predetermined distance apart, while maintaining a pressure on the structure being foamed; In general at the end of the foaming curve when the required thickness is obtained
interrupting the flow of heated fluid from the heater to the fluid circulation loop;
   in a first cooling phase cooling the press plates to a predetermined first temperature by opening the outlet pressure control valve and flowing temperature controlled water having a temperature and pressure below the saturation pressure at the prevailing temperature of the press plates from the at least one water source, such as the flash tank, by means of the circulation pump though the fluid circulation loop,
optionally in a second cooling phase cooling the press plates from the predetermined first temperature to a predetermined second temperature of the press plates by flowing temperature controlled water from the at least one water source at an increased water flow,
and in third cooling stage water cooling at a reduced cooling rate from the predetermined first or second temperature to ambient temperature by flowing temperature controlled water from the at least one water source, such as a separate water source.

Typically also opening of the press in order to allow removal of the sandwich panel as produced is comprised in the instructions.

In an embodiment thereof the instructions regarding the process of cooling the press plates comprises measuring the prevailing temperature of at least one press plate by the temperature sensor and determining the saturation pressure of the hot water at the measured temperature of the at least one press plate and setting the inlet pressure of the hot pressurized water fed from the heater to the press plates.

In a further embodiment the instructions regarding the process of cooling the press plates comprises setting the inlet temperature of the hot pressurized water fed to the press plates equal to or lower than the measured temperature of the press plates.

Advantageously the press is provided with a feed unit for introducing the starting structure in the press instead of manually arranging the starting structure in the press and/or a discharge unit for unloading the sandwich panel as produced from the press. Then the instructions additionally comprise introducing the starting structure in the press, and if applicable, removing the sandwich panel as manufactured from the press.

The above instructions are typical for manufacturing a sandwich panel using a physical blowing agent. A physical blowing agent is a swelling agent (i.e. a solvent having low solvability in the respective thermoplastic) or solvent that upon heating volatilizes and the gas bubbles obtained create the foam cells. Examples of physical blowing agents include carbon dioxide and light hydrocarbons such as various pentanes, and swelling agents like acetone and solvents like methylene chloride.

For thermoplastic sandwich panels manufactured with a chemical blowing agent, e.g. as described in WO2015/065176A1, a fast and homogeneous cooling from the decomposition temperature (or higher) of blowing agent to the foaming temperature, as well as from the foaming temperature to a temperature below Tg or Tm of the thermoplastic in the foam core of the thermoplastic sandwich panel is advantageous in order to reduce internal stresses and/or warpage and/or cycle times. In this way the optimum temperatures or ranges for decomposition and those for foaming can be selected and set independently.

A chemical blowing agent is a compound that upon decomposition forms low molecular gases like nitrogen, carbon dioxide, carbon monoxide, oxygen, ammonia and the like. Examples of chemical blowing agents include azobisisobutyronitrile, diazoaminobenzene, mononatriumcitrate and oxybis(p-benzenesulfonyl)hydrazide. Azo-, hydrazine and other nitrogen based chemical blowing agents are preferred. Azodicarbonamide is a preferred example of this category. Other examples include isocyanate for PU and sodium bicarbonate. A core layer of the first thermoplastic comprising a chemical blowing agent can be easily manufactured, e.g. by extrusion or calendering.

The invention can be used for either type of blowing agent. However, manufacture of a sandwich panel as explained above using a physical blowing agent, in particular a swelling agent, gain the most profit from the press according to the invention.

As a starting structure a core layer of a thermoplastic comprising the blowing agent in combination with at least one skin layer is used.

Thermoplastics, which are suitable for the core layer to be foamed using a physical blowing agent comprise both the crystalline and amorphous thermoplastics. Amorphous thermoplastics are preferred in view of solvability.

Thermoplastics which are suitable for the core layer to be foamed using a chemical blowing agent comprise both the crystalline and amorphous thermoplastics. Crystalline thermoplastics are preferred, as the difference between the glass transition temperature and melting point is small, offering the possibility of consolidating the thermoplastic once foamed within a small temperature interval.

As a material for the skin layers (also called covers, facings or face sheets) thermoplastics, in particular fibre-reinforced thermoplastics, and metal sheets, e.g. aluminium, can be used. The bottom and top cover layers are preferably made from the same material, but combinations, e.g. a bottom cover layer of a metal like aluminium and a top cover layer of a (fibre-reinforced) thermoplastic are also contemplated. The selection of the materials for the core layer and the skins is inter alia dependent on the desired properties of the final product application.

The thermoplastics for the core layer and the cover layers may be the same or different, including different grades. Hereinafter, for indication purposes the thermoplastic in the core layer is indicated as first thermoplastic, while the thermoplastic in a cover layer, if any, is referred to as second thermoplastic. Examples include polyetherimide (PEI), polyethersulfone (PES), polysulfone (PSU), polyphenylsulfone (PPSU), polyketone such as polyetheretherketone (PEEK), PPS polyphenylene sulphide, liquid crystal polymers, polycarbonate (PC), polyolefines (obtained from C1-C4 monomers) like polypropylene (PP), polyvinylchloride (PVC), polyethylene (PE), thermoplastic polyurethane (TPU), PA polyamide, PC poly carbonate, etc., as well as combinations thereof. Combinations of different cover layers, such as PEI/PEEK, PPSU/PEEK and PEI/PC are also conceivable. Thermoplastic biopolymers are also contemplated. Mixtures of e.g. PEI and PC are also contemplated in the fiber reinforced facing.. A skin may comprise one or more sublayers, the number of which may vary locally, e.g. in view of locally dedicated additional enforcement. In case of locally differing skins the heat transfer properties, like heat capacity and/or thermal conductivity, typically also differ locally. Then the press may be equipped with non-adherent local compensation parts which equalize the heat transfer properties.

Advantageously at least one of the skins is a fibre-reinforced layer of a second thermoplastic. Preferably both skins are fibre-reinforced layers of the second thermoplastic.

As indicated above, combinations of different thermoplastics for the first and second thermoplastics can also be used. Examples comprise, inter alia, PEI for the at least one core layer covered with (fibre-reinforced) skins made from PPSU, PS, PEEK or PC; PES or PPSU or combinations from them for the at least one core layer covered with (fibre-reinforced) cover layers made from PSU (polysulfone) or PC; and PP for the at least one core layer covered with (fibre-reinforced) layers made from polyamide, such as nylon.

In view of compatibility advantageously the type of the first thermoplastic of the core is equal to the type of the second thermoplastic in the facings.

Glass fibres are the preferred means of reinforcement. Other inorganic fibres, such as metal fibres, carbon fibres, and organic fibres such as aramid fibres, polymeric fibres, nano fibres of the aforementioned fibres and natural fibres can be used in the same manner, provided that they can withstand the temperature that they are subjected to during the operation of the method according to the invention. The fibres can be used in the form of mats, fabrics, chopped fibres and the like. Directional fibres, in particular unidirectional fibres, in which the fibre direction has been adapted to suit the intended use, can also be used advantageously.

High strength, high elongation steel cords, may be present in the fibre- reinforced cover layers. Instead of fibre-reinforcement or in addition thereto particulates like nanoparticles from metal or inorganics, may be used.

Reinforcement can also be applied between sublayers of the core layer of a thermoplastic wherein a chemical or physical blowing agent, in particular a swelling agent, is incorporated. Examples of such a reinforcement comprise (glass) fibre-reinforced layers, metal layers, steel cords.

Another preferred embodiment for the starting structure is a mat made of both inorganic fibres and thermoplastic fibres, e.g. a mat manufactured from glass fibres and propylene fibres or inorganic fibres and thermoplastic powders.

Additives, like nucleating agents, plasticizers, melt strength improvers and nanoparticles may also be present in the first thermoplastic layer.

The press plates of the press according to the invention may have flat surfaces. It is also contemplated that one or both of the press plates have a 2D or 3D curved surface configuration.

The invention also relates to a method of manufacturing a sandwich panel in a press having press plates, in particular a press according to the invention, which sandwich structure comprises at least one foam layer of a first thermoplastic and cover layers, the method comprising the steps of:
a) providing a starting structure comprising at least one layer of a first thermoplastic and two cover layers; wherein said at least one layer of said first thermoplastic comprises a physical blowing agent;
b) contact heating said starting structure between the press tools of the press to a foaming temperature while maintaining pressure on the starting structure by the press tools;
c) at said foaming temperature, foaming of said at least one layer of said first thermoplastic comprising the physical blowing agent by moving the press tools a predetermined distance apart, advantageously according to a predetermined foaming curve, while maintaining a pressure on the structure being foamed, wherein the volume is made to increase to a final volume and then kept constant, thereby obtaining said sandwich panel;
d) cooling of said sandwich panel in a first cooling stage at a constant final volume while pressurized in contact with the press plates to a predetermined first temperature of the press plates, such as below the glass transition temperature of the first thermoplastic comprising the physical blowing agent, e.g. in the range of about 110-120 °C, by opening an outlet pressure control valve and flowing temperature controlled water having a temperature and pressure below the saturation pressure at the prevailing temperature of the press plates from at least one water source, such as recovered water from a flash tank and/or a separate temperature controlled water source, by means of the circulation pump through the at least one flow channel of the press tools to the outlet pressure control valve, thereby establishing conversion of the water into steam;
e) optionally cooling of said sandwich panel in a second cooling stage from the first predetermined temperature to a predetermined second temperature of the press plates by flowing temperature controlled water from the at least one water source, such as recovered water from a downstream flash tank combined with other temperature controlled water, by means of the circulation pump at an increased flow through the at least one flow channel of the press plates;
f) cooling of the sandwich panel of step d) or optionally step e) in a third cooling stage at a reduced cooling rate, advantageously at the increased flow rate, from the predetermined second temperature to ambient temperature by flowing temperature controlled water from at least one water source; and
g) opening of the press and removing the cooled sandwich panel of step f) from the press.

The physical blowing agent in the first thermoplastic reduces the glass transition temperature of the first thermoplastic. In the above step d) the glass transition temperature is that of the first thermoplastic including the physical blowing agent. As a guideline the predetermined first temperature of the cooling step d) can be set at least some tens of degrees Celsius, such as in the range of 20-40 °C, above the boiling point of the physical blowing agent.

The invention also relates to a method for manufacturing a sandwich panel in a press having press plates, in particular a press according to the invention, which sandwich panel comprises at least one foam layer of a first thermoplastic and cover layers, the method comprising the steps of:
a) providing a starting structure comprising at least one layer of a first thermoplastic and two cover layers; wherein said at least one layer of said first thermoplastic comprises a chemical blowing agent having a decomposition temperature above the melting temperature or melting range of the first thermoplastic;
b) contact heating said starting structure between the press plates of the press to a temperature above the decomposition temperature of the chemical blowing agent so that decomposition of the chemical blowing agent occurs, thereby obtaining an intermediate structure wherein the decomposed chemical blowing agent is present in the at least one layer of the first thermoplastic while maintaining pressure on the starting structure by the press plates;
c) subsequent to the decomposition of the chemical blowing agent cooling of the intermediate structure thus obtained to a foaming temperature by opening an outlet pressure control valve and flowing temperature controlled water having a temperature and pressure below the saturation pressure at the prevailing temperature of the press plates from the at least one water source, e.g. recovered water from a downstream flash tank, by means of the circulation pump through the at least one flow channel of the press tools to the outlet pressure control valve, thereby establishing conversion of the water into steam, while maintaining pressure on the intermediate structure by the press plates);
d) at said foaming temperature, foaming of said at least one layer of said first thermoplastic comprising the decomposed chemical blowing agent by moving the press plates a predetermined distance apart, advantageously according to a predetermined foaming curve, while exerting a pressure on the structure being foamed, wherein the volume is made to increase to a final volume and then kept constant, thereby obtaining said sandwich panel;
e) cooling of said sandwich panel in a first cooling stage at a constant final volume while pressurized in contact with the press plates to a predetermined first temperature, e.g. below the glass transition temperature or melting temperature or range of the first thermoplastic, such as to a temperature in the range of about 110-120 °C, (at such a predetermined first temperature below Tg or Tm the foam cells will be stabilized and remain their shape) by opening an outlet pressure control valve and flowing temperature controlled water having a temperature and pressure below the saturation pressure at the prevailing temperature of the press plates from the at least one water source, such as recovered water from a downstream flash tank, by means of the circulation pump through the at least one flow channel of the press tools to the outlet pressure control valve, thereby establishing conversion of hot pressurized water into steam;
f) optionally cooling of said sandwich panel in a second cooling stage from the first predetermined temperature to a predetermined second temperature by flowing temperature controlled water from the at least one water source, such as recovered water from a downstream flash tank, by means of the circulation pump at an increased flow through the at least one flow channel of the press plate);
g) cooling of the sandwich panel of step e) or optionally step f) in a third cooling stage from the predetermined second temperature to ambient temperature by flowing temperature controlled water from at least one water source; and
h) opening of the press and removing sandwich panel cooled in step g) from the press. into steam.

The methods according to the invention, wherein at least a stage of the cooling after foaming is performed by conversion of hot pressurized water into steam, offers the same advantages as the press outlined above. The various advantageous and preferred embodiments of the press are applicable to the method in a similar way, including condensing of steam in a flash tank and re-use thereof in the first and/or second cooling stages..

In case of chemical blowing agents, the foaming temperature is above the glass transition temperatures for amorphous thermoplastics and above the melting point or range for (semi) crystalline thermoplastics.

Foaming occurs under controlled pressure contact with the starting structure by the press plates, that move away from each other. During foaming the volume of the structure is made to increase to a final volume, in particular a final thickness, and then kept constant, thereby obtaining said sandwich panel. Due to the difference between the operating temperature of the foaming step and the final low temperature (typically ambient temperature) a temperature dependent volume reduction (shrinkage) may occur. At any rate, no further expansion occurs. As explained above, the cooling step(s) using phase transformation may be partially performed under reduced pressure.

The invention is further illustrated by the attached drawing, wherein
Fig. 1 is a general representation of an embodiment of a press according to the invention; and
Fig. 2 is a schematic representation showing an embodiment of a press according to the invention in more detail.

In the figures similar components and parts are indicated by the same reference numerals.

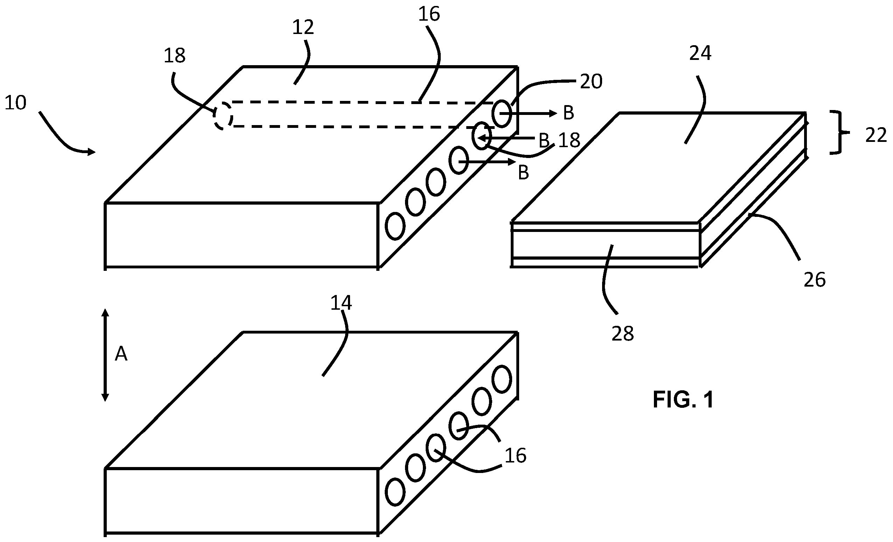

In Fig. 1 an embodiment of a press for manufacturing a sandwich panel is indicated in its entirety by reference numeral 10. The press 10 comprises two press plates 12 and 14 respectively, that can be displaced with respect to each other. E.g. the lower press plate 14 may have a fixed position, while the upper press plate 12 is vertically displaceable - as indicated by an arrow A - e.g. by a hydraulic cylinder (not shown). Each press plate 12, 14 has at least one internal flow channel 16 in its body, which extends from an inlet 18 to an outlet 20. Typically a number of internal flow channels 16 are distributed in the body of each press plate 12, 14 without impairing the press plate strength beyond a critical value in relation to the pressures to be exerted during operation. Arrows B indicate the flow direction of the fluids through the internal flow channels 16. As can be seen, in this embodiment adjacent flow channels are fed in counterflow. At the right side of Fig. 1 a finished sandwich panel 22 having two thin covers 24, 26 and a thicker foamed core 28 is shown. The covers 24 and 26 are advantageously glass-fibre reinforced thermoplastic layers, wherein preferably the thermoplastic is the same as the one in the foamed core layer 28.

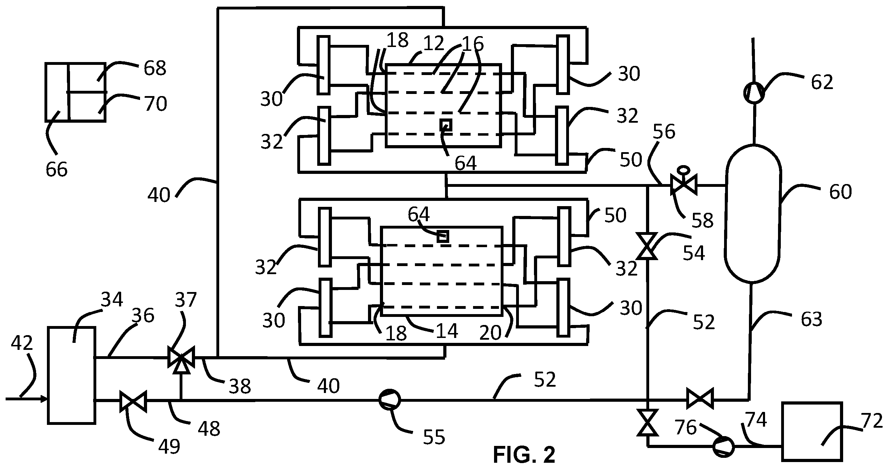

Fig. 2 shows an embodiment of the press 10 according to the invention in more detail.

The inlets 18 of the flow channels 16 (for sake of clarity only a few are presented in Fig. 2) in each press plate 12, 14 are connected to supply headers 30 and the outlets 20 are connected to collector headers 32. A heater 34 for generating a hot fluid for heating the press plates 12, 14 is connected with its hot water outlet 36 via valve 37 to the supply headers 30 through fluid supply conduit 38 and branched conduits 40. The heater 34 has a fresh fluid supply line 42 for introducing fresh fluid.

At the discharge side of the press plates 12, 14 the collector headers 32 are connected to the return inlet 48 provided with valve 49 of the heater 34 via branched discharge conduits 50 and return conduit 52, provided with valve 54 and pump 55. Discharge conduit 56 having outlet pressure control valve 58 connects the return conduit 52 to a flash vessel 60 provided with an optional vacuum pump 62. Recycle conduit 63 connects the recover water outlet 65 of the flash tank 60 to the return conduit 52 upstream (suction side) of the pump 55. The press plates 12, 14 are provided with temperature sensors 64 linked to controller 66, such as a PC or PLC, comprising a processor 68 and memory 70, controls the operation of the press, including opening and closing thereof, the conditions like temperature, pressure and flow rates of the supplied hot pressurized water, hot fluid for (pre)heating and initial cooling and of the temperature controlled water for further cooling and the associated equipment, like heater(s) and valves.

The press is operated as follows.

A starting structure comprises a core layer between skins. In an embodiment the core layer is composed of a thermoplastic comprising a physical blowing agent. The skins are advantageously glass-fibre reinforced thermoplastic layers, wherein preferably the thermoplastic is the same as the one in the core layer.

The starting structure is placed between the pre-heated press plates 12, 14 in a fitting manner at its periphery, such that lateral (horizontal) expansion/foaming is prevented. The press plates 12 and 14 have been preheated to the foaming temperature depending on the thermoplastic used, such as in the range of 170-190 °C, by flowing a hot fluid through the fluid circulation loop including the heater 34 and the press plates 12, 14, using pump 55. The press 10 is closed such that both press plates 12 and 14 contact the starting structure. Closing of the press 10 is performed fast in order to prevent premature and uncontrolled foaming of the core layer containing the physical blowing agent of the starting structure before pressure is applied by the press plates 12, 14. When a homogeneous foaming temperature (above the boiling temperature of the physical blowing agent) of the starting structure is obtained, the distance between the press plates 12, 14 is increased in a controlled manner, such that the skins maintain their contact with the respective press plate 12, 14 and thus pressure is exerted also during foaming. Once the distance has increased to a predetermined value thereof and thus the starting structure, in particular the core layer thereof, has foamed to the corresponding predetermined thickness, the circulating flow from the heater through the flow channels 16 is interrupted by operating valve 37 and 54, and cooling is started. When the first cooling stage is started, the outlet pressure control valve 58 starts to open and circulation in the fluid circulation loop by pump 55 is maintained. Advantageously the volume of the fluid circulation loop from the pump 55 at the upstream side of the press plates 12, 14 is small, so that only a small volume of hot water having a high temperature for heating is present and need to flow through the flow channels 16 of the heated press plates 12, 14, before actual cooling begins. The pressurized hot water having a temperature and pressure below the saturation pressure at the prevailing temperature of the press plates 12, 14 contained in the circulation loop will expand and convert into steam at the outlet control pressure valve 58 and in the flash tank 60. If the flash tank 60 is held at atmospheric pressure (no reduced pressure applied by vacuum pump 62) the recovered water will have a temperature of about 100 °C. The recovered water is fed through recycle conduit 63 via the pump 55, where it is pressurized, back to the press plates 12, 14, where again steam is formed and dissolved in the water, which is passed to the outlet pressure control valve 58. This type of evaporative cooling is continued until a predetermined first temperature of the press plates 12, 14 is reached. At that time the temperature difference between the press plates 12, 14 and the water temperature of about 100 °C is small, such that cooling rate will slow down. To maintain a high cooling rate the optional second cooling phase is started, wherein temperature controlled water from water reservoir 72 is introduced via conduit 74 and optional pump 76 into the return conduit 52 at a position upstream of the pump 55. The combined flow having a temperature such as in the range of 70-90 °C comprised of recovered water and temperature controlled water is pressurized by pump 55 and supplied to the press plates 12, 14 for further cooling thereof to a second predetermined temperature. At the end of the second cooling phase the predetermined second temperature is reached through water cooling (convection/conduction) by the press plates and then the press is switched to a final cooling (third cooling stage) using temperature controlled water from source 72 or a further temperature controlled water source (not shown) in order to cool the press plates from the second predetermined temperature down to ambient temperature at a lower cooling rate.

In case of a chemical blowing agent the press is heated to a temperature above the decomposition temperature of the chemical blowing agent.

Typically the press plates 12 and 14 are pre-heated to a temperature well above the melt temperature or melting range of the thermoplastic used and above the decomposition temperature of the chemical blowing agent. Alternatively the press plates 12 and 14 are pre-heated to a temperature below the melting point of the thermoplastic to be foamed and thus also below the decomposition temperature of the chemical blowing agent, which is higher than said melting temperature. After closing the press 10 the temperature of the starting structure is further raised by heating the press plates 12, 14 to a temperature above the decomposition temperature. After decomposition of the blowing agent, the structure is quickly cooled to an appropriate temperature above the melting point/range of the thermoplastic by evaporative cooling via the outlet pressure control valve 58, as discussed above. Cooling is continued until the predetermined lower temperature above the melting temperature of the thermoplastic is reached. When the starting structure still under pressure has reached a homogeneous temperature just above the melting temperature of the used thermoplastic in the core layer, the distance between the press plates 12, 14 is increased in a controlled manner, such that the skins maintain their contact with the respective press plate 12, 14 and thus pressure is maintained on the structure being foamed. Once the distance has increased to a predetermined value thereof and thus the starting structure, in particular the core layer thereof, has foamed to the corresponding predetermined thickness, cooling is re-started by operating the outlet pressure control valve 58 in the three cooling phases as explained above. The intermediate cooling from the decomposition temperature to the melting temperature of the thermoplastic may be omitted. Then foaming is performed at a relatively high foaming temperature.

In case of an embodiment having the vacuum pump the second cooling stage is omitted.

## Claims

1. Press (10) for manufacturing a sandwich product comprising a foamed thermoplastic core between covers, in particular a thermoplastic sandwich panel, more particularly in-situ manufacturing a thermoplastic sandwich panel (22), the press (10) comprising a first press plate and an opposite second press plate (12, 14) that are configured to be movable with respect to one another, each press plate (12, 14) having at least one internal flow channel (16) having an inlet (18) and an outlet (20), wherein at least one press plate (12, 14) is provided with a temperature sensor (64),
a heater (34) configured for generating hot water having a hot water outlet (36) provided with a valve (37), a return inlet (48) provided with a valve (49) and a supply inlet (42) for fresh water,
a fluid circulation loop for heating and cooling the press plates (12, 14) comprising
a fluid supply conduit (38) in fluid communication with the outlet (36) of the heater (34) and in fluid communication with the inlet (18) of the at least one internal flow channel (16) in each press plate (12, 14),
a fluid return conduit (52) in fluid communication with the outlet (20) of the at least one internal flow channel (16) of each press plate (12, 14) and in fluid communication with the return inlet (48) of the heater (34),
wherein the fluid return conduit (52) is in controlled fluid communication with an outlet control pressure valve (58)
wherein the fluid return conduit (52) is provided with a circulation pump (55) for pressurizing the water in the fluid circulation loop;
at least one water source (60, 72) configured for supplying temperature controlled water having an outlet in fluid communication with the fluid return conduit (52) upstream of the pump (55) and provided with a valve ();
control means (66) configured for measuring the prevailing temperature of at least one press plate (12,14) by the temperature sensor (64) and configured for setting the flow of water in the fluid circulation loop by the circulation pump (55), and configured for opening the outlet control pressure valve (58) during a first cooling stage of cooling to a predetermined first temperature of the at least one press plate such that temperature controlled water, pressurized by the circulation pump (55), having a temperature and pressure below the saturation pressure at the prevailing temperature of the press plates (12, 14) is supplied from the at least one water source (72) through the fluid return conduit (52) to the press plates (12,14); and configured for during a third cooling stage of cooling at a reduced cooling rate from a predetermined second temperature of the at least one press plate (10, 12), equal to or lower than the predetermined first temperature, to ambient temperature flowing controlled water from the at least one water source (72) having a temperature below the prevailing temperature of the at least one pressure plate (12, 14) through the fluid circulation loop.

2. Press according to claim 1, wherein the downstream side of the outlet control pressure valve (58) is at atmospheric pressure, and wherein the control means (66) are also configured for during a second cooling stage of cooling from the predetermined first temperature to a predetermined second temperature of the at least one press plate (12, 14) introducing water from the at least one water source (72) in the fluid circulation loop and increasing the total water flow by controlling the pump (55).

3. Press according to claim 1 or claim 2, further comprising a vacuum pump (62) in fluid communication with the outlet control pressure valve (58), and wherein the predetermined second temperature is equal to the predetermined first temperature.

4. Press according to claim 1 or claim 2, wherein the outlet control pressure valve (58) is in fluid communication with a downstream flash tank (60),

5. Press according to claim 4, wherein the at least one water source comprises the flash tank (60) that is provided with a water outlet in fluid communication with the fluid return conduit (52), upstream of the circulation pump (55), and wherein the control means (66) are configured for during the first cooling stage circulating recovered water from the flash tank (60) to the fluid return conduit (52), and an additional water source (72) for in the third cooling stage supplying temperature controlled water having an outlet in fluid communication with the fluid return conduit (52) upstream of the pump (55) and provided with a valve.

6. Press according to claim 2, wherein the predetermined first temperature is in the range of 105 - 125 °C.

7. Press according to claim 2, wherein the predetermined second temperature is in the range of 75 -90 °C.

8. Press according to any one of the preceding claims, wherein the control means (66) are configured for during the third cooling stage controlling the temperature difference between the temperature of the cooling water and the temperature of the at least one press plate in the range of less than 15 °C.

9. Press according to any one of the preceding claims, wherein the controller (66) is configured for controlling the outlet control pressure valve (58) such that the saturation pressure of the water fed to the press plates (12,14) at an inlet pressure is equal to or lower than the saturation pressure thereof at the prevailing temperature of the press plates (12, 14).

10. Press according to any of the preceding claims, wherein the control means (66) comprise a processor (68) and a memory (70) storing computer-readable instructions which, when executed by the processor (66), perform processes, including:
pre-heating the press tools (12, 14) by flowing a heated fluid from the heater () through the fluid circulation loop;
closing the press (10) by moving the pre-heated press plates(12, 14) towards one another and exerting a pressure on a starting structure of the sandwich product (22) to be manufactured;
heating the starting structure to the foaming temperature, while exerting a pressure on the starting structure;
foaming the starting structure at the foaming temperature by moving the press tools (12, 14) a predetermined distance apart, while maintaining a pressure on the structure being foamed;
interrupting the flow of heated fluid from the heater (34) to the fluid circulation loop;
in a first cooling phase cooling the press plates (12, 14) to a predetermined first temperature by opening the outlet pressure control valve (58) and flowing temperature controlled water having a temperature and pressure below the saturation pressure at the prevailing temperature of the press plates from the at least one water source (60, 72) by means of the circulation pump (55) though the fluid circulation loop,
optionally in a second cooling phase cooling the press plates (12, 14) from the predetermined first temperature to a predetermined second temperature of the press plates (12, 14) by flowing temperature controlled water from the at least one water source (60, 72) at an increased water flow,
and in third cooling stage water cooling at a reduced cooling rate from the predetermined first or second temperature to ambient temperature by flowing temperature controlled water from the at least one water source (60, 72).

11. Method for manufacturing a sandwich product (22) in a press having press plates, preferably a press (10) according to any one of the preceding claims, which sandwich structure (22) comprises at least one foam layer (28) of a first thermoplastic and cover layers (24, 26), the method comprising the steps of:
a) providing a starting structure comprising at least one layer of a first thermoplastic and two cover layers; wherein said at least one layer of said first thermoplastic comprises a physical blowing agent;
b) contact heating said starting structure between the press tools (12, 14) of the press (10) to a foaming temperature while maintaining pressure on the starting structure by the press tools (12, 14);
c) at said foaming temperature, foaming of said at least one layer of said first thermoplastic comprising the physical blowing agent by moving the press tools (12, 14) a predetermined distance apart, while maintaining a pressure on the structure being foamed, wherein the volume is made to increase to a final volume and then kept constant, thereby obtaining said sandwich panel (22);
d) cooling of said sandwich panel (22) in a first cooling stage at a constant final volume while pressurized in contact with the press plates (12, 14) to a predetermined first temperature of the press plates (12, 14) by opening an outlet pressure control valve (58) and flowing temperature controlled water having a temperature and pressure below the saturation pressure at the prevailing temperature of the press plates (12, 14) from at least one water source (60, 72) by means of the circulation pump (55) through the at least one flow channel (16) of the press tools (12, 14) to the outlet pressure control valve (58), thereby establishing conversion of the water into steam;
e) optionally cooling of said sandwich panel in a second cooling stage from the first predetermined temperature to a predetermined second temperature of the press plates (12, 14) by flowing flowing temperature controlled water from the at least one water source (60, 72) by means of the circulation pump (55), at an increased flow through the at least one flow channel (16) of the press plates (12, 14);
f) cooling of the sandwich panel (22) of step d) or optionally step e) in a third cooling stage at a reduced cooling rate from the predetermined first or second temperature to ambient temperature by flowing temperature controlled water from the at least one water source (60, 72).; and
g) opening of the press (10) and removing the cooled sandwich panel (22) of step f) from the press (10).

12. Method for manufacturing a sandwich panel (22) in a press having press plates , preferably a press (10) according to any one of the preceding claims 1-10, which sandwich panel (22) comprises at least one foam layer (28) of a first thermoplastic and cover layers (24, 26), the method comprising the steps of:
a) providing a starting structure comprising at least one layer of a first thermoplastic and two cover layers; wherein said at least one layer of said first thermoplastic comprises a chemical blowing agent having a decomposition temperature above the melting temperature or melting range of the first thermoplastic;
b) contact heating said starting structure between the press plates (12, 14) of the press (10) to a temperature above the decomposition temperature of the chemical blowing agent so that decomposition of the chemical blowing agent occurs, thereby obtaining an intermediate structure wherein the decomposed chemical blowing agent is present in the at least one layer of the first thermoplastic while maintaining pressure on the starting structure by the press plates;
c) subsequent to the decomposition of the chemical blowing agent cooling of the intermediate structure thus obtained to a foaming temperature by opening an outlet pressure control valve (58) and flowing temperature controlled water having a temperature and pressure below the saturation pressure at the prevailing temperature of the press plates (12, 14) from the at least one water source (60, 72) by means of the circulation pump (55) through the at least one flow channel (16) of the press tools (12, 14) to the outlet pressure control valve (58), thereby establishing conversion of the water into steam, while maintaining pressure on the intermediate structure by the press plates (12, 14);
d) at said foaming temperature, foaming of said at least one layer of said first thermoplastic comprising the decomposed chemical blowing agent by moving the press plates (12, 14) a predetermined distance apart, while exerting a pressure on the structure being foamed, wherein the volume is made to increase to a final volume and then kept constant, thereby obtaining said sandwich panel (22);
e) cooling of said sandwich panel (22) in a first cooling stage at a constant final volume while pressurized in contact with the press plates (12, 14) to a predetermined first temperature by opening an outlet pressure control valve (58) and flowing temperature controlled water having a temperature and pressure below the saturation pressure at the prevailing temperature of the press plates (12, 14) from the at least one water source (60, 72) by means of the circulation pump (55) through the at least one flow channel (16) of the press tools (12, 14) to the outlet pressure control valve (58), thereby establishing conversion of hot pressurized water into steam;
f) optionally cooling of said sandwich panel in a second cooling stage from the first predetermined temperature to a predetermined second temperature by flowing temperature controlled water from the at least one water source (60, 72) by means of the circulation pump (55), at an increased flow through the at least one flow channel (16) of the press plates (12, 14);
g) cooling of the sandwich panel (22) of step e) or optionally step f) in a third cooling stage at a reduced cooling rate from the predetermined second temperature to ambient temperature by flowing temperature controlled water from the at least one water source (60, 72); and
h) opening of the press (10) and removing sandwich panel (22) cooled in step g) from the press (10).

13. Method according to any one of the preceding claims 11-12, wherein a cooling step by conversion of hot pressurized water into steam is performed at a sub atmospheric pressure.

14. Method according to any one of the preceding claims 11-13, wherein the first cooling step by conversion of hot pressurized water into steam is performed under a continuous supply of water with a temperature of 80-100 C.

## Patentansprüche

1. Presse (10) zur Herstellung eines Sandwichprodukts, das einen geschäumten thermoplastischen Kern zwischen Deckschichten umfasst, insbesondere einer thermoplastischen Sandwichplatte, insbesondere in-situ-Herstellung einer thermoplastischen Sandwichplatte (22), wobei die Presse (10) umfasst
eine erste Pressplatte und eine gegenüberliegende zweite Pressplatte (12, 14), die dafür gestaltet sind, relativ zueinander beweglich zu sein, wobei jede Pressplatte (12, 14) wenigstens einen internen Strömungskanal (16) mit einem Einlass (18) und einem Auslass (20) aufweist, wobei wenigstens eine Pressplatte (12, 14) mit einem Temperatursensor (64) versehen ist,
eine Heizvorrichtung (34), die zum Erzeugen von heißem Wasser gestaltet ist, mit einem Heißwasserauslass (36), der mit einem Ventil (37) versehen ist, einem Rückführeinlass (48), der mit einem Ventil (49) versehen ist, und einem Zufuhreinlass (42) für Frischwasser,
einen Fluidzirkulationskreis zum Erhitzen und Kühlen der Pressplatten (12, 14), umfassend
eine Fluidzufuhrleitung (38) in Fluidverbindung mit dem Auslass (36) der Heizvorrichtung (34) und in Fluidverbindung mit dem Einlass (18) des wenigstens einen internen Strömungskanals (16) in jeder Pressplatte (12, 14),
eine Fluidrückführleitung (52) in Fluidverbindung mit dem Auslass (20) des wenigstens einen internen Strömungskanals (16) jeder Pressplatte (12, 14) und in Fluidverbindung mit dem Rückführeinlass (48) der Heizvorrichtung (34),
wobei die Fluidrückführleitung (52) in gesteuerter Fluidverbindung mit einem Auslasssteuerdruckventil (58) steht,
wobei die Fluidrückführleitung (52) mit einer Umwälzpumpe (55) zum Druckbeaufschlagen des Wassers in dem Fluidzirkulationskreis versehen ist;
wenigstens eine Wasserquelle (60, 72), die zum Zuführen von temperaturreguliertem Wasser gestaltet ist, mit einem Auslass in Fluidverbindung mit der Fluidrückführleitung (52) stromaufwärts der Pumpe (55) und mit einem Ventil () versehen;
Steuermittel (66), die zum Messen der herrschenden Temperatur wenigstens einer Pressplatte (12, 14) durch den Temperatursensor (64) gestaltet sind und zum Einstellen des Wasserstroms in dem Fluidzirkulationskreis durch die Umwälzpumpe (55) gestaltet sind, und zum Öffnen des Auslasssteuerdruckventils (58) während einer ersten Kühlstufe des Kühlens auf eine vorgegebene erste Temperatur der wenigstens einen Pressplatte gestaltet sind, so dass temperaturreguliertes Wasser, das durch die Umwälzpumpe (55) druckbeaufschlagt wird, mit einer Temperatur und einem Druck unterhalb des Sättigungsdrucks bei der herrschenden Temperatur der Pressplatten (12, 14) von der wenigstens einen Wasserquelle (72) über die Fluidrückführleitung (52) den Pressplatten (12, 14) zugeführt wird; und gestaltet sind zum, während einer dritten Kühlstufe des Kühlens mit einer verringerten Kühlrate von einer vorgegebenen zweiten Temperatur der wenigstens einen Pressplatte (10, 12), die gleich oder niedriger als die vorgegebene erste Temperatur ist, auf Umgebungstemperatur, Strömen von reguliertem Wasser aus der wenigstens einen Wasserquelle (72) mit einer Temperatur unterhalb der herrschenden Temperatur der wenigstens einen Druckplatte (12, 14) durch den Fluidzirkulationskreis.

2. Presse nach Anspruch 1, wobei die stromabwärtige Seite des Auslasssteuerdruckventils (58) bei Atmosphärendruck liegt und wobei die Steuermittel (66) auch dafür gestaltet sind, während einer zweiten Kühlstufe des Kühlens von der vorgegebenen ersten Temperatur auf eine vorgegebene zweite Temperatur der wenigstens einen Pressplatte (12, 14) Wasser aus der wenigstens einen Wasserquelle (72) in den Fluidzirkulationskreis einzuleiten und den Gesamtwasserfluss durch Steuern der Pumpe (55) zu erhöhen.

3. Presse nach Anspruch 1 oder Anspruch 2, ferner umfassend eine Vakuumpumpe (62) in Fluidverbindung mit dem Auslasssteuerdruckventil (58), und wobei die vorgegebene zweite Temperatur gleich der vorgegebenen ersten Temperatur ist.

4. Presse nach Anspruch 1 oder Anspruch 2, wobei das Auslasssteuerdruckventil (58) in Fluidverbindung mit einem stromabwärtigen Entspannungsbehälter (60) steht,

5. Presse nach Anspruch 4, wobei die wenigstens eine Wasserquelle den Entspannungsbehälter (60) umfasst, der mit einem Wasserauslass in Fluidverbindung mit der Fluidrückführleitung (52) stromaufwärts der Umwälzpumpe (55) versehen ist, und wobei die Steuermittel (66) dafür gestaltet sind, während der ersten Kühlstufe rückgewonnenes Wasser aus dem Entspannungsbehälter (60) zu der Fluidrückführleitung (52) zu zirkulieren, und eine zusätzliche Wasserquelle (72) zum Zuführen von temperaturreguliertem Wasser in der dritten Kühlstufe mit einem Auslass, der stromaufwärts der Pumpe (55) in Fluidverbindung mit der Fluidrückführleitung (52) steht und mit einem Ventil versehen ist.

6. Presse nach Anspruch 2, wobei die vorgegebene erste Temperatur in dem Bereich von 105 - 125 °C liegt.

7. Presse nach Anspruch 2, wobei die vorgegebene zweite Temperatur in dem Bereich von 75 - 90 °C liegt.

8. Presse nach einem der vorstehenden Ansprüche, wobei die Steuermittel (66) dafür gestaltet sind, während der dritten Kühlstufe die Temperaturdifferenz zwischen der Temperatur des Kühlwassers und der Temperatur der wenigstens einen Pressplatte in dem Bereich von weniger als 15 °C zu steuern

9. Presse nach einem der vorstehenden Ansprüche, wobei die Steuerung (66) dafür gestaltet ist, das Auslasssteuerdruckventil (58) so zu steuern, dass der Sättigungsdruck des den Pressplatten (12, 14) mit einem Einlassdruck zugeführten Wassers gleich oder niedriger als der Sättigungsdruck davon bei der herrschenden Temperatur der Pressplatten (12, 14) ist.

10. Presse nach einem der vorstehenden Ansprüche, wobei die Steuermittel (66) einen Prozessor (68) und einen Speicher (70) umfassen, der computerlesbare Anweisungen speichert, die, wenn durch den Prozessor (66) ausgeführt , Prozesse durchführen, einschließlich:
Vorwärmen der Presswerkzeuge (12, 14) durch Strömen eines erhitzten Fluids aus der Heizvorrichtung () durch den Fluidzirkulationskreis;
Schließen der Presse (10) durch Bewegen der vorgewärmten Pressplatten (12, 14) aufeinander zu und Ausüben eines Drucks auf eine Ausgangsstruktur des herzustellenden Sandwichprodukts (22);
Erhitzen der Ausgangsstruktur auf die Schäumungstemperatur, während ein Druck auf die Ausgangsstruktur ausgeübt wird;
Schäumen der Ausgangsstruktur bei der Schäumungstemperatur durch Bewegen der Presswerkzeuge (12, 14) um einen vorgegebenen Abstand voneinander weg, während ein Druck auf die zu schäumende Struktur aufrechterhalten wird;
Unterbrechen des Flusses von erhitztem Fluid von der Heizvorrichtung (34) zu dem Fluidzirkulationskreis;
in einer ersten Kühlphase Abkühlen der Pressplatten (12, 14) auf eine vorgegebene erste Temperatur durch Öffnen des Auslassdruckregelventils (58) und Strömen von temperaturreguliertem Wasser mit einer Temperatur und einem Druck unterhalb des Sättigungsdrucks bei der herrschenden Temperatur der Pressplatten aus der wenigstens einen Wasserquelle (60, 72) mithilfe der Umwälzpumpe (55) durch den Fluidzirkulationskreis,
gegebenenfalls in einer zweiten Kühlphase Kühlen der Pressplatten (12, 14) von der vorgegebenen ersten Temperatur auf eine vorgegebene zweite Temperatur der Pressplatten (12, 14) durch Strömen von temperaturreguliertem Wasser aus der wenigstens einen Wasserquelle (60, 72) bei einem erhöhten Wasserstrom,
und in der dritten Kühlstufe Wasserkühlung mit einer verringerten Kühlrate von der vorgegebenen ersten oder zweiten Temperatur auf Umgebungstemperatur durch Strömen von temperaturreguliertem Wasser aus der wenigstens einen Wasserquelle (60, 72).

11. Verfahren zum Herstellen eines Sandwichprodukts (22) in einer Presse mit Pressplatten, vorzugsweise einer Presse (10) nach einem der vorstehenden Ansprüche, wobei die Sandwichstruktur (22) wenigstens eine Schaumschicht (28) aus einem ersten Thermoplast und Deckschichten (24, 26) umfasst, wobei das Verfahren die Schritte umfasst:
a) Bereitstellen einer Ausgangsstruktur, die wenigstens eine Schicht eines ersten Thermoplasten und zwei Deckschichten umfasst; wobei die wenigstens eine Schicht des ersten Thermoplasten ein physikalisches Treibmittel umfasst;
b) Kontaktheizen der Ausgangsstruktur zwischen den Presswerkzeugen (12, 14) der Presse (10) auf eine Schäumungstemperatur, während der Druck auf die Ausgangsstruktur durch die Presswerkzeuge (12, 14) aufrechterhalten wird;
c) Schäumen der wenigstens einen Schicht des ersten Thermoplasten, die das physikalische Treibmittel umfasst, bei der Schäumungstemperatur durch Bewegen der Presswerkzeuge (12, 14) um einen vorgegebenen Abstand voneinander weg, während ein Druck auf die geschäumte Struktur aufrechterhalten wird, wobei das Volumen auf ein Endvolumen erhöht und dann konstant gehalten wird, wodurch die Sandwichplatte (22) erhalten wird;
d) Abkühlen der Sandwichplatte (22) in einer ersten Kühlstufe bei konstantem Endvolumen unter Druck in Kontakt mit den Pressplatten (12, 14) auf eine vorgegebene erste Temperatur der Pressplatten (12, 14) durch Öffnen eines Auslassdruckregelventils (58) und Strömen von temperaturreguliertem Wasser mit einer Temperatur und einem Druck unterhalb des Sättigungsdrucks bei der herrschenden Temperatur der Pressplatten (12, 14) aus wenigstens einer Wasserquelle (60, 72) mithilfe der Umwälzpumpe (55) durch den wenigstens einen Strömungskanal (16) der Presswerkzeuge (12, 14) zu dem Auslassdruckregelventil (58), wodurch Umwandlung des Wassers zu Dampf bewirkt wird;
e) gegebenenfalls Abkühlen der Sandwichplatte in einer zweiten Kühlstufe von der ersten vorgegebenen Temperatur auf eine vorgegebene zweite Temperatur der Pressplatten (12, 14) durch Strömen von strömendem temperaturreguliertem Wasser aus der wenigstens einen Wasserquelle (60, 72) mithilfe der Umwälzpumpe (55) bei einer erhöhten Strömung durch den wenigstens einen Strömungskanal (16) der Pressplatten (12, 14);
f) Kühlen der Sandwichplatte (22) von Schritt d) oder gegebenenfalls Schritt e) in einer dritten Kühlstufe mit einer verringerten Kühlrate von der vorgegebenen ersten oder zweiten Temperatur auf Umgebungstemperatur durch Strömen von temperaturreguliertem Wasser aus der wenigstens einen Wasserquelle (60, 72); und
g) Öffnen der Presse (10) und Entnehmen der gekühlten Sandwichplatte (22) von Schritt f) aus der Presse (10).

12. Verfahren zum Herstellen einer Sandwichplatte (22) in einer Presse mit Pressplatten, vorzugsweise einer Presse (10) nach einem der vorstehenden Ansprüche 1-10, wobei die Sandwichplatte (22) wenigstens eine Schaumschicht (28) aus einem ersten Thermoplast und Deckschichten (24, 26) umfasst, wobei das Verfahren die Schritte umfasst:
a) Bereitstellen einer Ausgangsstruktur, die wenigstens eine Schicht eines ersten Thermoplasten und zwei Deckschichten umfasst; wobei die wenigstens eine Schicht des ersten Thermoplasten ein chemisches Treibmittel mit einer Zersetzungstemperatur oberhalb der Schmelztemperatur oder des Schmelzbereichs des ersten Thermoplasten umfasst;
b) Kontaktheizen der Ausgangsstruktur zwischen den Pressplatten (12, 14) der Presse (10) auf eine Temperatur oberhalb der Zersetzungstemperatur des chemischen Treibmittels, so dass Zersetzung des chemischen Treibmittels auftritt, wodurch eine Zwischenstruktur erhalten wird, in der das zersetzte chemische Treibmittel in der wenigstens einen Schicht des ersten Thermoplasten vorhanden ist, während Druck auf die Ausgangsstruktur durch die Pressplatten aufrechterhalten wird;
c) im Anschluss an die Zersetzung des chemischen Treibmittels Abkühlen der so erhaltenen Zwischenstruktur durch Öffnen eines Auslassdruckregelventils (58) auf eine Schäumungstemperatur und aus der wenigstens einen Wasserquelle (60, 72) Strömen von temperaturreguliertem Wasser mit einer Temperatur und einem Druck unterhalb des Sättigungsdrucks bei der herrschenden Temperatur der Pressplatten (12, 14) mithilfe der Umwälzpumpe (55) durch den wenigstens einen Strömungskanal (16) der Presswerkzeuge (12, 14) zu dem Auslassdruckregelventil (58), wodurch Umwandlung des Wassers in Dampf unter Aufrechterhaltung des Drucks auf die Zwischenstruktur durch die Pressplatten (12, 14) bewirkt wird;
d) Schäumen der wenigstens einen Schicht des ersten Thermoplasten, die das zersetzte chemische Treibmittel umfasst, bei der Schäumungstemperatur durch Bewegen der Pressplatten (12, 14) um einen vorgegebenen Abstand voneinander weg, während ein Druck auf die geschäumte Struktur ausgeübt wird, wobei das Volumen auf ein Endvolumen erhöht und dann konstant gehalten wird, wodurch die Sandwichplatte (22) erhalten wird;
e) Abkühlen der Sandwichplatte (22) in einer ersten Kühlstufe bei konstantem Endvolumen unter Druck in Kontakt mit den Pressplatten (12, 14) auf eine vorgegebene erste Temperatur durch Öffnen eines Auslassdruckregelventils (58) und Strömen von temperaturreguliertem Wasser mit einer Temperatur und einem Druck unterhalb des Sättigungsdrucks bei der herrschenden Temperatur der Pressplatten (12, 14) aus der wenigstens einen Wasserquelle (60, 72) mithilfe der Umwälzpumpe (55) durch den wenigstens einen Strömungskanal (16) der Presswerkzeuge (12, 14) zu dem Auslassdruckregelventil (58), wodurch eine Umwandlung von heißem druckbeaufschlagtem Wasser in Dampf bewirkt wird;
f) gegebenenfalls Kühlen der Sandwichplatte in einer zweiten Kühlstufe von der ersten vorgegebenen Temperatur auf eine vorgegebene zweite Temperatur durch Strömen von temperaturreguliertem Wasser aus der wenigstens einen Wasserquelle (60, 72) mithilfe der Umwälzpumpe (55) bei einer erhöhten Strömung durch den wenigstens einen Strömungskanal (16) der Pressplatten (12, 14);
g) Kühlen der Sandwichplatte (22) aus Schritt e) oder gegebenenfalls Schritt f) in einer dritten Kühlstufe mit einer verringerten Kühlrate von der vorgegebenen zweiten Temperatur auf Umgebungstemperatur durch Strömen von temperaturreguliertem Wasser aus der wenigstens einen Wasserquelle (60, 72); und
h) Öffnen der Presse (10) und Entnehmen der bei Schritt g) gekühlten Sandwichplatte (22) aus der Presse (10).

13. Verfahren nach einem der vorstehenden Ansprüche 11-12, wobei ein Kühlschritt durch Umwandlung von heißem druckbeaufschlagtem Wasser in Dampf bei einem Unterdruck durchgeführt wird.

14. Verfahren nach einem der vorstehenden Ansprüche 11-13, wobei der erste Kühlschritt durch Umwandeln von heißem druckbeaufschlagtem Wasser in Dampf unter einer kontinuierlichen Zufuhr von Wasser mit einer Temperatur von 80-100 °C durchgeführt wird.

## Revendications

1. Presse (10) pour fabriquer un produit sandwich comprenant une âme thermoplastique mousse entre des couvertures, en particulier un panneau sandwich thermoplastique, plus particulièrement pour fabriquer sur place un panneau sandwich thermoplastique (22), la presse (10) comprenant
une première plaque de presse et une seconde plaque de presse opposée (12, 14) qui sont configurées pour être déplaçables l'une par rapport à l'autre, chaque plaque de presse (12, 14) ayant au moins un canal d'écoulement interne (16) ayant une entrée (18) et une sortie (20), dans laquelle au moins une plaque de presse (12, 14) est pourvue d'un capteur de température (64),
un élément chauffant (34) configuré pour générer de l'eau chaude ayant une sortie d'eau chaude (36) pourvue d'une soupape (37), une entrée de retour (48) pourvue d'une soupape (49) et une entrée d'alimentation (42) pour de l'eau fraîche,
une boucle de circulation de fluide pour chauffer et refroidir les plaques de presse (12, 14) comprenant
un conduit d'alimentation en fluide (38) en communication fluidique avec la sortie (36) de l'élément chauffant (34) et en communication fluidique avec l'entrée (18) de l'au moins un canal d'écoulement interne (16) dans chaque plaque de presse (12, 14),
un conduit de retour de fluide (52) en communication fluidique avec la sortie (20) de l'au moins un canal d'écoulement interne (16) de chaque plaque de presse (12, 14) et en communication fluidique avec l'entrée de retour (48) de l'élément chauffant (34),
dans laquelle le conduit de retour de fluide (52) est en communication fluidique contrôlée avec une soupape de contrôle de pression de sortie (58),
dans laquelle le conduit de retour de fluide (52) est pourvu d'une pompe de circulation (55) pour mettre sous pression l'eau dans la boucle de circulation de fluide ;
au moins une source d'eau (60, 72) configurée pour effectuer l'alimentation en eau à température contrôlée ayant une sortie en communication fluidique avec le conduit de retour de fluide (52) en amont de la pompe (55) et pourvue d'une soupape () ;
des moyens de contrôle (66) configurés pour mesurer la température dominante d'au moins une plaque de presse (12, 14) par le capteur de température (64) et configurés pour régler l'écoulement d'eau dans la boucle de circulation de fluide par le biais de la pompe de circulation (55), et configurés pour ouvrir la soupape de contrôle de pression de sortie (58) durant un premier stade de refroidissement, de refroidissement jusqu'à une première température prédéterminée de l'au moins une plaque de presse de manière telle que l'alimentation en de l'eau à température contrôlée, mise sous pression par la pompe de circulation (55), ayant une température et une pression plus basses que la pression de saturation à la température dominante des plaques de presse (12, 14), est effectuée depuis l'au moins une source d'eau (72) à travers le conduit de retour de fluide (52) jusqu'aux plaques de presse (12, 14) ; et configurés pour, durant un troisième stade de refroidissement, de refroidissement à un taux de refroidissement réduit depuis une seconde température prédéterminée de l'au moins une plaque de presse (10, 12), égale ou inférieure à la première température prédéterminée, jusqu'à une température ambiante, effectuer l'écoulement de l'eau contrôlée depuis l'au moins une source d'eau (72) ayant une température plus basse que la température dominante de l'au moins une plaque de pression (12, 14) à travers la boucle de circulation de fluide.

2. Presse selon la revendication 1, dans laquelle le côté aval de la soupape de contrôle de pression de sortie (58) est à pression atmosphérique, et dans laquelle les moyens de contrôle (66) sont également configurés pour, durant un deuxième stade de refroidissement, de refroidissement depuis la première température prédéterminée jusqu'à une seconde température prédéterminée de l'au moins une plaque de presse (12, 14), introduire de l'eau, en provenance de l'au moins une source d'eau (72), dans la boucle de circulation de fluide et augmenter l'écoulement d'eau total en contrôlant la pompe (55).

3. Presse selon la revendication 1 ou la revendication 2, comprenant en outre une pompe à vide (62) en communication fluidique avec la soupape de contrôle de pression de sortie (58), et dans laquelle la seconde température prédéterminée est égale à la première température prédéterminée.

4. Presse selon la revendication 1 ou la revendication 2, dans laquelle la soupape de contrôle de pression de sortie (58) est en communication fluidique avec un réservoir de détente en aval (60).

5. Presse selon la revendication 4, dans laquelle l'au moins une source d'eau comprend le réservoir de détente (60) qui est pourvu d'une sortie d'eau en communication fluidique avec le conduit de retour de fluide (52), en amont de la pompe de circulation (55), et dans laquelle les moyens de contrôle (66) sont configurés pour, durant le premier stade de refroidissement, effectuer la circulation de l'eau récupérée depuis le réservoir de détente (60) jusqu'au conduit de retour de fluide (52), et une source d'eau supplémentaire (72) pour, dans le troisième stade de refroidissement, effectuer l'alimentation en eau à température contrôlée ayant une sortie en communication fluidique avec le conduit de retour de fluide (52) en amont de la pompe (55) et pourvue d'une soupape.

6. Presse selon la revendication 2, dans laquelle la première température prédéterminée est dans la plage de 105 à 125 °C.

7. Presse selon la revendication 2, dans laquelle la seconde température prédéterminée est dans la plage de 75 à 90 °C.

8. Presse selon l'une quelconque des revendications précédentes, dans laquelle les moyens de contrôle (66) sont configurés pour, durant le troisième stade de refroidissement, contrôler la différence de température entre la température de l'eau de refroidissement et la température de l'au moins une plaque de presse dans la plage de moins de 15 °C.

9. Presse selon l'une quelconque des revendications précédentes, dans laquelle l'unité de contrôle (66) est configurée pour contrôler la soupape de contrôle de pression de sortie (58) de manière telle que la pression de saturation de l'eau fournie aux plaques de presse (12, 14) à une pression d'entrée est égale ou inférieure à la pression de saturation de celle-ci à la température dominante des plaques de presse (12, 14).

10. Presse selon de quelconques des revendications précédentes, dans laquelle les moyens de contrôle (66) comprennent un processeur (68) et une mémoire (70) stockant des instructions lisibles par ordinateur qui, lorsqu'elles sont exécutées par le processeur (66), réalisent des processus, incluant :
le préchauffage des outils de presse (12, 14) en effectuant l'écoulement d'un fluide chauffé depuis l'élément chauffant () à travers la boucle de circulation de fluide ;
la fermeture de la presse (10) en déplaçant les plaques de presse préchauffées (12, 14) l'une vers l'autre et en exerçant une pression sur une structure de départ du produit sandwich (22) devant être fabriqué ;
le chauffage de la structure de départ jusqu'à la température de moussage, tout en exerçant une pression sur la structure de départ ;
le moussage de la structure de départ à la température de moussage en déplaçant les outils de presse (12, 14) pour les éloigner l'un de l'autre selon une distance prédéterminée, tout en maintenant une pression sur la structure en train de subir le moussage ;
l'interruption de l'écoulement de fluide chauffé depuis l'élément chauffant (34) jusqu'à la boucle de circulation de fluide ;
dans une première phase de refroidissement, le refroidissement des plaques de presse (12, 14) jusqu'à une première température prédéterminée en ouvrant la soupape de contrôle de pression de sortie (58) et en effectuant l'écoulement de l'eau à température contrôlée, ayant une température et une pression plus basses que la pression de saturation à la température dominante des plaques de presse, depuis l'au moins une source d'eau (60, 72) au moyen de la pompe de circulation (55) à travers la boucle de circulation de fluide,
facultativement, dans une deuxième phase de refroidissement, le refroidissement des plaques de presse (12, 14) depuis la première température prédéterminée jusqu'à une seconde température prédéterminée des plaques de presse (12, 14) en effectuant l'écoulement d'eau à température contrôlée provenant de l'au moins une source d'eau (60, 72) à un écoulement d'eau augmenté,
et, dans troisième stade de refroidissement, le refroidissement par eau, à un taux de refroidissement réduit, depuis la première ou seconde température prédéterminée jusqu'à la température ambiante en effectuant l'écoulement d'eau à température contrôlée provenant de l'au moins une source d'eau (60, 72).

11. Procédé de fabrication d'un produit sandwich (22) dans une presse ayant des plaques de presse, de préférence une presse (10) selon l'une quelconque des revendications précédentes, laquelle structure sandwich (22) comprend au moins une couche de mousse (28) d'un premier thermoplastique et des couches de couverture (24, 26), le procédé comprenant les étapes suivantes :
a) la fourniture d'une structure de départ comprenant au moins une couche d'un premier thermoplastique et deux couches de couverture ; dans lequel ladite au moins une couche dudit premier thermoplastique comprend un agent gonflant physique ;
b) le chauffage par contact de ladite structure de départ entre les outils de presse (12, 14) de la presse (10) jusqu'à une température de moussage tout en maintenant une pression sur la structure de départ par le biais des outils de presse (12, 14) ;
c) à ladite température de moussage, le moussage de ladite au moins une couche dudit premier thermoplastique comprenant l'agent gonflant physique en déplaçant les outils de presse (12, 14) pour les éloigner l'un de l'autre selon une distance prédéterminée, tout en maintenant une pression sur la structure en train de subir le moussage, dans lequel le volume est amené à augmenter jusqu'à un volume final et puis maintenu constant, obtenant ainsi ledit panneau sandwich (22) ;
d) le refroidissement dudit panneau sandwich (22) dans un premier stade de refroidissement à un volume final constant tout en étant mis sous pression en contact avec les plaques de presse (12, 14) jusqu'à une première température prédéterminée des plaques de presse (12, 14) en ouvrant une soupape de contrôle de pression de sortie (58) et en effectuant l'écoulement de l'eau à température contrôlée, ayant une température et une pression plus basses que la pression de saturation à la température dominante des plaques de presse (12, 14), depuis au moins une source d'eau (60, 72) au moyen de la pompe de circulation (55) à travers l'au moins un canal d'écoulement (16) des outils de presse (12, 14) jusqu'à la soupape de contrôle de pression de sortie (58), établissant ainsi la conversion de l'eau en vapeur ;
e) facultativement le refroidissement dudit panneau sandwich dans un deuxième stade de refroidissement depuis la première température prédéterminée jusqu'à une seconde température prédéterminée des plaques de presse (12, 14) en effectuant l'écoulement de l'eau à température contrôlée depuis l'au moins une source d'eau (60, 72) au moyen de la pompe de circulation (55), à un écoulement augmenté, à travers l'au moins un canal d'écoulement (16) des plaques de presse (12, 14) ;
f) le refroidissement du panneau sandwich (22) de l'étape d) ou facultativement l'étape e) dans un troisième stade de refroidissement à un taux de refroidissement réduit depuis la première ou seconde température prédéterminée jusqu'à la température ambiante en effectuant l'écoulement d'eau à température contrôlée provenant de l'au moins une source d'eau (60, 72) ; et
g) l'ouverture de la presse (10) et l'enlèvement du panneau sandwich refroidi (22), de l'étape f), de la presse (10).

12. Procédé de fabrication d'un panneau sandwich (22) dans une presse ayant des plaques de presse, de préférence une presse (10) selon l'une quelconque des revendications précédentes 1 à 10, lequel panneau sandwich (22) comprend au moins une couche de mousse (28) d'un premier thermoplastique et des couches de couverture (24, 26), le procédé comprenant les étapes suivantes :
a) la fourniture d'une structure de départ comprenant au moins une couche d'un premier thermoplastique et deux couches de couverture ; dans lequel ladite au moins une couche dudit premier thermoplastique comprend un agent gonflant chimique ayant une température de décomposition plus haute que la température de fusion ou la plage de fusion du premier thermoplastique ;
b) le chauffage par contact de ladite structure de départ entre les plaques de presse (12, 14) de la presse (10) jusqu'à une température plus haute que la température de décomposition de l'agent gonflant chimique de telle sorte que la décomposition de l'agent gonflant chimique ait lieu, obtenant ainsi une structure intermédiaire dans lequel l'agent gonflant chimique décomposé est présent dans l'au moins une couche du premier thermoplastique tout en maintenant une pression sur la structure de départ par les plaques de presse ;
c) suivant la décomposition de l'agent gonflant chimique, le refroidissement de la structure intermédiaire ainsi obtenue jusqu'à une température de moussage en ouvrant une soupape de contrôle de pression de sortie (58) et en effectuant l'écoulement de l'eau à température contrôlée, ayant une température et une pression plus basses que la pression de saturation à la température dominante des plaques de presse (12, 14), depuis l'au moins une source d'eau (60, 72) au moyen de la pompe de circulation (55) à travers l'au moins un canal d'écoulement (16) des outils de presse (12, 14) jusqu'à la soupape de contrôle de pression de sortie (58), établissant ainsi la conversion de l'eau en vapeur, tout en maintenant une pression sur la structure intermédiaire par les plaques de presse (12, 14) ;
d) à ladite température de moussage, le moussage de ladite au moins une couche dudit premier thermoplastique comprenant l'agent gonflant chimique décomposé en déplaçant les plaques de presse (12, 14) pour les éloigner l'un de l'autre selon une distance prédéterminée, tout en exerçant une pression sur la structure en train de subir le moussage, dans lequel le volume est amené à augmenter jusqu'à un volume final et puis maintenu constant, obtenant ainsi ledit panneau sandwich (22) ;
e) le refroidissement dudit panneau sandwich (22) dans un premier stade de refroidissement à un volume final constant tout en étant mis sous pression en contact avec les plaques de presse (12, 14) jusqu'à une première température prédéterminée en ouvrant une soupape de contrôle de pression de sortie (58) et en effectuant l'écoulement de l'eau à température contrôlée, ayant une température et une pression plus basses que la pression de saturation à la température dominante des plaques de presse (12, 14), depuis l'au moins une source d'eau (60, 72) au moyen de la pompe de circulation (55) à travers l'au moins un canal d'écoulement (16) des outils de presse (12, 14) jusqu'à la soupape de contrôle de pression de sortie (58), établissant ainsi la conversion d'eau chaude mise sous pression en vapeur ;
f) facultativement le refroidissement dudit panneau sandwich dans un deuxième stade de refroidissement depuis la première température prédéterminée jusqu'à une seconde température prédéterminée en effectuant l'écoulement d'eau à température contrôlée provenant de l'au moins une source d'eau (60, 72) au moyen de la pompe de circulation (55), à un écoulement augmenté à travers l'au moins un canal d'écoulement (16) des plaques de presse (12, 14) ;
g) le refroidissement du panneau sandwich (22) de l'étape e) ou facultativement de l'étape f) dans un troisième stade de refroidissement à un taux de refroidissement réduit depuis la seconde température prédéterminée jusqu'à une température ambiante en effectuant l'écoulement d'eau à température contrôlée provenant de l'au moins une source d'eau (60, 72) ; et
h) l'ouverture de la presse (10) et l'enlèvement du panneau sandwich (22), refroidi dans l'étape g), de la presse (10).

13. Procédé selon l'une quelconque des revendications précédentes 11 et 12, dans lequel une étape de refroidissement par conversion d'eau chaude, mise sous pression, en vapeur est réalisée à une pression sous-atmosphérique.

14. Procédé selon l'une quelconque des revendications précédentes 11 à 13, dans lequel la première étape de refroidissement par conversion d'eau chaude, mise sous pression, en vapeur est réalisée sous une alimentation continue en eau avec une température de 80 à 100 °C.
